# EUROPEAN PATENT APPLICATION

(11) **EP 4 099 104 A1**
(43) Date of publication of application: **07.12.2022**
(21) Application number: 21747292.7
(22) Date of filing: 15.01.2021
(51) Int. Cl.: G05B 13/04, G05B 23/02

(54) **MODEL UPDATING DEVICE AND METHOD, AND PROCESS CONTROL SYSTEM**

(30) Priority: 31.01.2020 JP 2020014324
(71) Applicant: Hitachi, Ltd., Tokyo 100-8280 (JP)
(72) Inventor: KONO, Yohei, Tokyo 100-8280 (JP); KOIZUMI, Minoru, Tokyo 100-8280 (JP)
(74) Representative: Strehl Schübel-Hopf & Partner
(86) International application number: PCT/JP2021/001242
(87) International publication number: WO 2021/153271

(57) **Abstract**

There is proposed a model update device and method, and a process control system, which are capable of significantly reducing the labor, time, and monetary cost required for model update and are also easily applicable to a plant in which the existing model predictive control is introduced, without causing a loss of operating profit.

By converting a data format of operation data of a target process into a delay coordinate format and solving a regression problem including a regularization term for the operation data converted into the delay coordinate format, an update model reflecting secular change information of the target process is generated, and the model is replaced with the generated update model to be updated.

## Description

### Technical Field

The present invention relates to a model update device and method, and a process control system that are suitable for application to a process control system that controls a plant where model predictive control (MPC) is introduced.

### Background Art

MPC is an advanced process control technology widely used in the process industry such as a chemical process and the like, and currently, more than 5,000 applications are operated all over the world. In MPC, a controller called a model predictive controller is used.

This controller (hereinafter, this controller is also referred to as an MPC) holds a model of a target process (hereinafter, this is referred to as a process model) such as a multi-input multi-output process (hereafter, this is referred to as a multiple input multiple output (MIMO) process), that is, a model for reproducing or predicting time series data of the process output from time series data of the process input.

Then, the MPC calculates an optimum input signal to bring the process output close to the reference value or hold the process output at the reference value, by using the process model of the target process and the time series data of the process input and output, and inputs the calculated input signal to the target process. The process model used at this time is obtained by inputting a test signal such as a maximum length sequence (M sequence) or the like into the process, and performing system identification by using the output obtained from the input test signal.

A general problem with the MPC is that the control performance deteriorates over time. Specifically, due to improvement and deterioration of equipment, changes in operation plans, changes in the quantity and quality of materials, and temporal changes in the target process such as debottlenecking (obstacle removal) or the like, the prediction accuracy of the process model decreases, which causes deterioration of control performance. Such deterioration of control performance causes a loss of profit and is a big problem in operation. In order to maintain good control performance, it is necessary to monitor the quality of the process model such as prediction accuracy and the like, and update the process model when necessary. In addition, like introducing MPC, updating the process model is also based on the system identification. Insertion of the test signal during operation causes a loss of profit, and enormous human cost and time cost are also required to adjust the amplitude and cycle of the test signal so as not to violate the operation constraint.

In order to address this problem, for example, JP-T-2012-528392 (PTL 1) discloses a technique of estimating a model quality for each input end and output end using the input and output data of the process and the existing process model, and automatically generating and inputting the test signal based on the model quality, thereby realizing reduction of test signals and reduction of adjustment cost at the time of model update.

### Citation List

### Patent Literature

PTL 1: JP-T-2012-528392

### Summary of Invention

### Technical Problem

However, in the technique disclosed in PTL 1, there is a problem that the test signal is still input when the process model is updated, which causes a loss of operating profit. In addition, there is a possibility of violating the operating regulations of the plant in view of the fact that the test signal is automatically input.

Further, in the technique disclosed in PTL 1, although a method of adding the test signal to the process input is used, because MPC is a control method (closed-loop control) that determines the process input based on the measured value of the process output, the quality estimation accuracy and the identification accuracy of the model decrease due to the correlation between the test signal and the process output. In PTL 1, in order to eliminate such a correlation and improve the accuracy, an embodiment is also proposed, in which an automatic test signal generator (tester) and an MPC are integrated, but there is also a problem that the above-mentioned embodiment cannot be applied to a plant in which the existing MPC is introduced.

The present invention is made in consideration of the above issues and intends to propose a model update device and method, and a process control system, which are capable of significantly reducing the labor, time, and monetary cost required for model update and are also easily applicable to a plant in which the existing model predictive control is introduced, without causing a loss of operating profit.

### Solution to Problem

In order to solve such a problem, according to the present invention, a model update device that updates a model of a target process in a model predictive control is provided, which includes: a conversion unit that converts a data format of operation data of the target process into a delay coordinate format; an update model generation unit that generates an update model reflecting secular change information of the target process by solving a regression problem including a regularization term for the operation data converted into the delay coordinate format; and a model update unit that updates the model by replacing the model with the model generated by the update model generation unit.

Further, according to the present invention, a model update method executed by a model update device that updates a model of a target process in a model predictive control is provided, which includes: a first step of converting a data format of operation data of the target process into a delay coordinate format; a second step of generating an update model reflecting secular change information of the target process by solving a regression problem including a regularization term for the operation data converted into the delay coordinate format; and a third step of updating the model by replacing the model with the generated update model.

Still further, according to the present invention, a process control system that controls a target process, includes: a control device that holds a model of the target process, calculates an input value for the target process such that an error of an output value of the target process with respect to a reference value predicted by using the model is minimized, and inputs the calculated input value to the target process to control the target process; and a model update device that updates the model held by the control unit, in which the model update device includes a conversion unit that converts a data format of operation data of the target process into a delay coordinate format; an update model generation unit that generates an update model reflecting secular change information of the target process by solving a regression problem including a regularization term for the operation data converted into the delay coordinate format; and a model update unit that updates the model by replacing the model with the update model generated by the update model generation unit.

According to the model update device and method and the process control system of the present invention, the model can be updated to reflect a temporal change of the target process without causing a loss of operating profit or violating the target process (plant) operating regulations due to the use of the test signal. Further, the model update device and method and the process control system of the present invention can be easily applied to existing plants in which model predictive control is introduced without requiring special equipment.

### Advantageous Effects of Invention

According to the present invention, it is possible to implement a model update device and method, and a process control system, which are capable of significantly reducing the labor, time, and monetary cost required for model update and are also easily appliable to a plant in which the existing model predictive control is introduced, without causing a loss of operating profit.

### Brief Description of Drawings

[Fig. 1] Fig. 1 is a block diagram illustrating an overall configuration of a process control system according to a first embodiment.
[Fig. 2] Fig. 2 is a block diagram illustrating a hardware configuration of a model update device.
[Fig. 3] Fig. 3 is a block diagram illustrating a logical configuration of a model update device according to the first embodiment.
[Fig. 4] Fig. 4 is a diagram illustrating a correlation between a reference value in a MIMO process and operation data.
[Fig. 5] Fig. 5 is a chart illustrating a configuration example of an operation data management table.
[Fig. 6] Fig. 6 is a chart illustrating a configuration example of a model update data management table.
[Fig. 7] Fig. 7 is a flowchart illustrating a processing procedure of prediction error calculation processing.
[Fig. 8] Fig. 8 is a diagram illustrating a screen configuration example of a prediction error monitoring screen.
[Fig. 9] Fig. 9 is a flowchart illustrating a processing procedure of model update data duration selection processing.
[Fig. 10] Fig. 10 is a flowchart illustrating a processing procedure of model update processing.
[Fig. 11] Fig. 11 is a diagram illustrating a screen configuration example of model update data and update model display screen.
[Fig. 12] Fig. 12 is a block diagram illustrating an overall configuration of a process control system according to a second embodiment.
[Fig. 13] Fig. 13 is a block diagram illustrating a logical configuration of a model update device according to the second embodiment.

### Description of Embodiments

An embodiment of the present invention will be described in detail with reference to the drawings.

### (1) First embodiment

### (1-1) Configuration of process control system according to the present embodiment

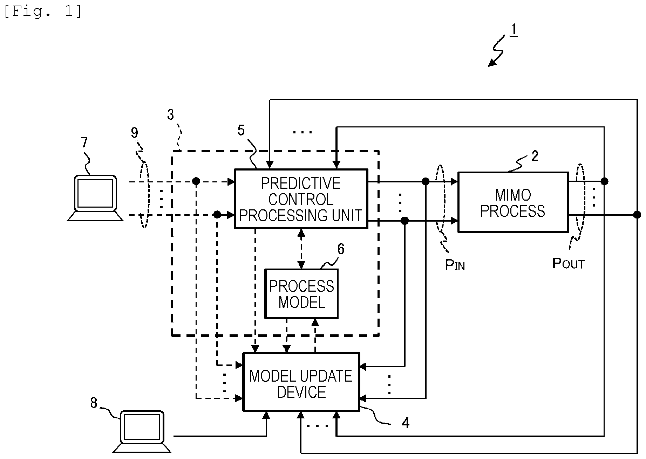

Fig. 1 illustrates a system configuration of a process control system 1 to which a model update device according to a first embodiment is applied. The process control system 1 includes a MIMO process 2, a control device 3, and a model update device 4. Further, the control device 3 is an MPC controller, and includes a predictive control processing unit 5 and a process model 6. The control device 3 is connected to the MIMO process 2, the model update device 4, and a first input and output device 7, and the model update device 4 is connected to the MIMO process 2, the control device 3, and a second input and output device 8.

A typical example of the MIMO process 2 is a chemical process. The chemical process may be used in not only the chemical industry, but also the steel industry, the food industry, the pharmaceutical industry, the paper industry, and the like. The control device 3 controls the MIMO process 2. The process model 6 is a model that simulates the MIMO process 2 on a computer.

The predictive control processing unit 5 predicts a future value of a process output P_{OUT} based on a prediction error of the process output P_{OUT} (hereafter, this may be referred to as historical data) output from the MINO process 2 and the process model 6. Then, the predictive control processing unit 5 calculates a value of a process input P_{IN} such that an error between the predicted value of the process output P_{OUT} and a reference value 9 given by the first input and output device 7 is minimized, and inputs the calculated process input P_{IN} to the MIMO process 2. As a result, it is possible to hold the process output P_{OUT} at the reference value 9 or bring the process output P_{OUT} close to the reference value 9.

The process input P_{IN} is M (M is an integer of 2 or more) set values (valve opening, and the like) given to the instrumentation equipment in the MIMO process 2. Further, the process output P_{OUT} is one or both of a physical quantity (temperature, pressure, flow rate, and the like) measured by a sensor in the MIMO process 2 and a set value of the instrumentation equipment, and has P (P is an integer of 2 or more) values.

The model update device 4 calculates a difference between a dynamical property of the MIMO process 2 and a dynamical property of the process model 6 when one or both of the process input P_{IN} of the MIMO process 2 and the reference value 9 are given as a prediction error of the process model 6, and updates the process model 6 based on the calculated prediction error. The process input P_{IN} or the reference value 9 given at the time of calculating the prediction error is set to the process input P_{IN} or the reference value 9 at the time of operation of the MIMO process 2.

The model update device 4 collects or accumulates time series data of the process input P_{IN}, the process output P_{OUT}, and the reference value 9, and further, acquires a predictive control algorithm of the predictive control processing unit 5 and the process model 6 expressed in a mathematical formula from the control device 3, which are used for updating the process model 6. At this time, the model update device 4 updates the process model 6 in accordance with a temporal change of the MIMO process 2. Examples of the factor that causes the temporal change of the MIMO process 2 include improvements in equipment, deterioration over time, changes in operation plans, changes in quantity and quality of materials, debottlenecking, and the like.

The model update device 4 acquires the dynamical properties of the MIMO process 2 as input and output time series data. At this time, the model update device 4 converts the dynamical properties of the process model 6 into an input and output time series data format, to match a data format of the dynamical properties of the MIMO process 2 with a data format of the dynamical properties of the process model 6, and then calculates a prediction error.

The time series data of the process input P_{IN}, the process output P_{OUT}, and the reference value 9 are data at the time of operation of the MIMO process 2 (hereinafter, appropriately referred to as operation data). When the MIMO process 2 is in operation, the set value given to the MIMO process 2 and the physical quantity measured in the MIMO process 2 are controlled to be held at or brought to a steady state. Then, the prediction error reflects the dynamical properties due to, among all dynamical properties of the MIMO process 2, the temporal change of the MIMO process 2.

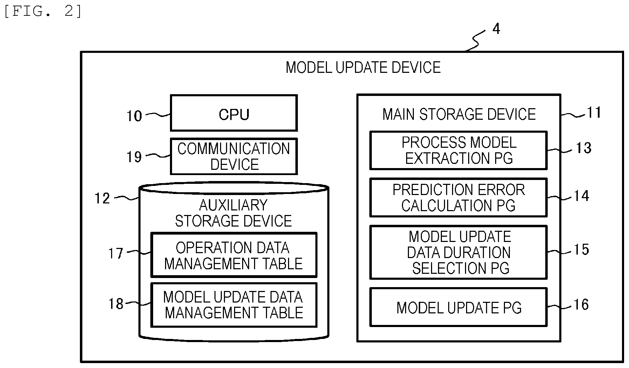

Fig. 2 illustrates a hardware configuration of the model update device 4. As illustrated in Fig. 2, the model update device 4 is configured with a general-purpose computer device including information processing resources such as a central processing unit (CPU) 10, a main storage device 11, an auxiliary storage device 12, a communication device 19, and the like.

The CPU 10 is a processor that controls the overall operation of the model update device 4. Further, the main storage device 11 is configured with a semiconductor memory and the like, for example, and is used as a work memory of the CPU 10. A process model extraction processing program 13, a prediction error calculation processing program 14, a model update data duration selection program 15, and a model update program 16, which will be described below, are loaded from the auxiliary storage device 12 into the main storage device 11 at the time of starting the model update device 4 or when necessary, and are stored and held in the main storage device 11.

The auxiliary storage device 12 is configured with a large-capacity non-volatile storage device such as a hard disk device, a solid state disc (SSD), or the like, for example. Various programs and various kinds of control data are stored in the auxiliary storage device 12. An operation data management table 17 and a model update data management table 18, which will be described below, are also stored and held in the auxiliary storage device 12.

Further, the communication device 19 is configured with a network interface card (NIC) or the like, for example, and performs protocol control during communication with the control device 3 or the like.

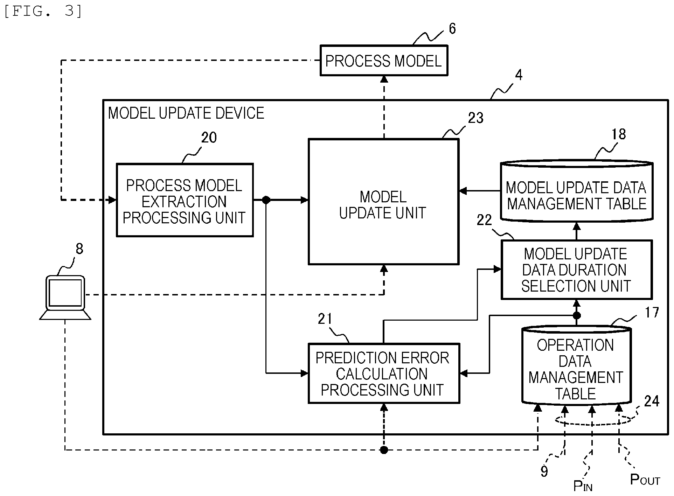

Fig. 3 illustrates a logical configuration of the model update device 4. As illustrated in Fig. 3, the model update device 4 includes the operation data management table 17, a process model extraction processing unit 20, a prediction error calculation processing unit 21, a model update data duration selection unit 22, the model update data management table 18, and a model update unit 23.

The operation data management table 17 is a table used for storing and holding operation data 24 including respective time series data of the reference value 9 of the MIMO process 2 (Fig. 1), the process input P_{IN} and the process output P_{OUT} as the historical data of the MIMO process 2.

The process model extraction processing unit 20 is a functional unit implemented by the CPU 10 (Fig. 1) executing the process model extraction processing program 13 (Fig. 1), extracts the process model 6 held by the control device 3 (Fig. 1), and outputs the extracted process model 6 to the prediction error calculation processing unit 21 and the model update unit 23.

The prediction error calculation processing unit 21 is a functional unit implemented by the CPU 10 executing the prediction error calculation processing program 14 (Fig. 2). The prediction error calculation processing unit 21 calculates a difference (prediction error) between the predicted value of the process output P_{OUT} calculated using the process model 6 and an actual process output P_{OUT} based on the process model 6 extracted by the process model extraction processing unit 20 and the operation data 24 of the MIMO process 2 stored in the operation data management table 17, and outputs the calculated prediction error to the model update data duration selection unit 22.

The model update data duration selection unit 22 is a functional unit implemented by the CPU 10 executing the model update data duration selection program 15 (Fig. 1), and selects, among the operation data 24 stored in the operation data management table 17, the operation data 24 in the duration where an influence of noise is relatively small, as the model update data to be used for updating the process model 6.

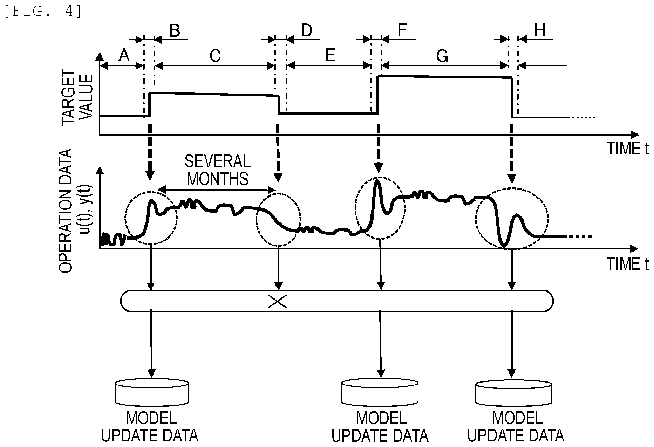

Here, Fig. 4 illustrates a correlation between the reference value 9 in the MIMO process 2 and the operation data 24. In Fig. 4, the uppermost graph (the graph with a vertical axis as "reference value") illustrates an example of a temporal change of the reference value 9, and the graph in the next row (the graph with a vertical axis as "operation data u(t), y(t)") illustrates an example of a temporal change of the operation data 24 at that time. In the drawing, "u(t)" represents the time series data of the process input P_{IN} at time t, and "y(t)" represents the time series data of the process output P_{OUT} at time t.

As illustrated in Fig. 4, in general, the operation data 24 in a steady state in a plant has little fluctuation. In this case, the influence of noise on the operation data 24 increases as the fluctuation of the operation data 24 is smaller, and conversely, the influence of noise on the operation data 24 decreases as the fluctuation of the operation data 24 is larger. Therefore, in the duration where the reference value is not changed and the plant is in operation in a steady state (durations A, C, E, G, ... In Fig. 4; hereinafter, these are referred to as reference value constant durations), the influence of noise on the operation data 24 is relatively large, and the deterioration information of the plant included in the operation data 24 is relatively small.

Meanwhile, when the reference value 9 is changed due to a change in the quantity or quality of the material, the operation data 24 is also changed greatly accordingly, such that, in the durations before and after the change of the reference value (durations B, D, F, H, ..., in Fig. 4; hereinafter, these are referred to as reference value change durations), the influence of noise on the operation data 24 is relatively small, and the deterioration information of the plant included in the operation data 24 is relatively large.

The model update data duration selection unit 22 extracts the operation data 24 in each reference value change duration in the reference value change duration, in which the reference value 9 is changed by at least a certain magnitude (for example, by a constant multiple of the steady state deviation between the reference value 9 and the steady state operation data 24) compared to the noise, from the operation data management table 17 as a model update data candidate. At this time, a time duration (time width) when extracting the operation data 24 in the reference value change duration may be prepared in advance as a default value in accordance with the properties of the plant and the material, or may be specified by the user via the second input and output device 8.

Further, for each reference value change duration from which the operation data 24 is extracted as the model update data candidate as described above, the model update data duration selection unit 22 calculates an error (prediction error) between the actual process output P_{OUT} included in the operation data 24 in the reference value change duration and the process output P_{OUT} in the reference value change duration predicted using the process model 6, respectively. Then, the model update data duration selection unit 22 selects the operation data 24 in the reference value change duration having the calculated prediction error of a certain value or more as the model update data, and stores the selected model update data in the model update data management table 18.

Further, even for the reference value constant duration, for a duration in which the trend of the steady state properties of the MIMO process 2 changes above a certain level, the model update data duration selection unit 22 also extracts the operation data 24 of this reference value constant duration from the operation data management table 17 and stores the extracted operation data 24 in the model update data management table 18 as the model update data.

The model update unit 23 updates the process model 6 extracted by the process model extraction processing unit 20 by using the model update data stored in the model update data management table 18. Specifically, the model update unit 23 expresses the operation data 24 including the dynamical properties of the MIMO model 2 as an evolutional equation using a delay coordinate system, and solves the regression problem including the regularization term for the operation data 24 converted into the evolutional equation, to partially reflect the secular change information of the MIMO model 2 in the process model 6. The specific processing content of the model update processing executed by the model update unit 23 described above will be described below.

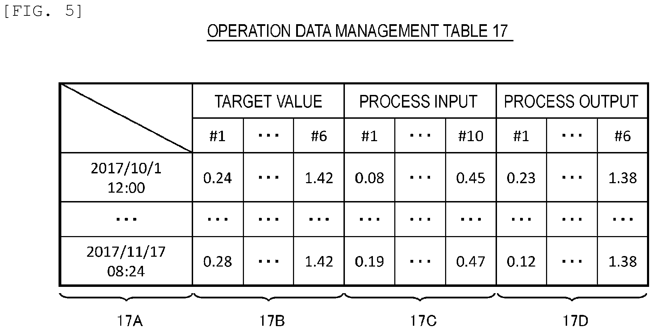

Fig. 5 illustrates a configuration example of the operation data management table 17 (Fig. 3). As illustrated in Fig. 5, the operation data management table 17 includes an acquisition date and time column 17A, a reference value column 17B, a process input column 17C, and a process output column 17D.

The date and time when the corresponding operation data 24 is acquired is stored in the acquisition date and time column 17A. The reference value 9 (Fig. 3) acquired at that date and time is stored in the reference value column 17B, and each process input P_{IN} acquired at that date and time is stored in the process input column 17C, respectively. Further, each process output P_{OUT} acquired at that date and time is stored in the process output column 17D, respectively. In addition, Fig. 5 illustrates a configuration example of the operation data management table 17 when there are 10 process inputs P_{IN} such as valve opening and the like and 6 process outputs P_{OUT} such as sensor output and the like.

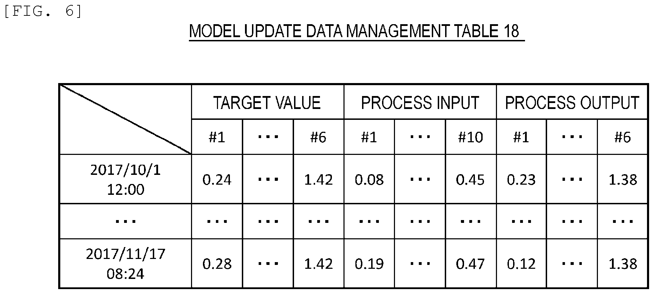

Further, Fig. 6 illustrates a configuration example of the model update data management table 18. As is clearly seen from Fig. 6, the model update data management table 18 has the same table configuration as the operation data management table 17. Therefore, detailed description of the model update data management table 18 will be omitted here.

### (1-2) Processing of each functional unit

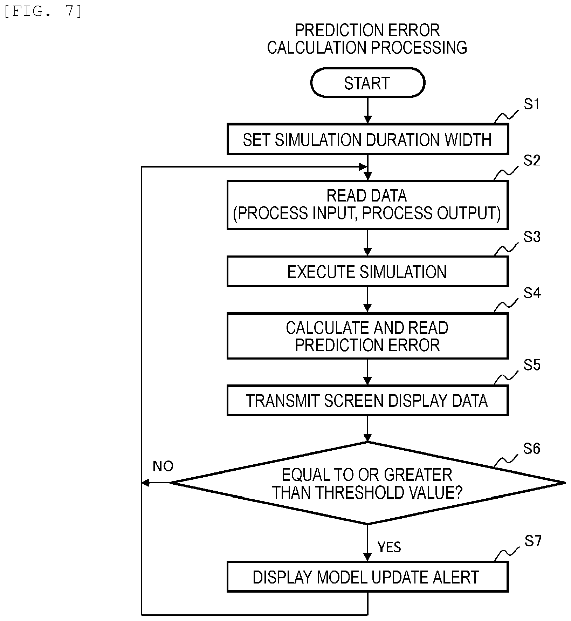

Next, specific processing content of each of various processing executed in connection with the update processing of the process model 6 as described above, by the prediction error calculation processing unit 21 (Fig. 3), the model update data duration selection unit 22 (Fig. 3), and the model update unit 23 (Fig. 3) will be described with reference to Figs. 7 to 10.

### (1-2-1) Processing of prediction error calculation processing unit

Fig. 7 illustrates a processing procedure of a series of processing (hereinafter, this is referred to as prediction error calculation processing) executed by the prediction error calculation processing unit 21 (Fig. 3) in connection with the update processing of the process model 6. The prediction error calculation processing unit 21 calculates a prediction error of the current process model 6 with respect to the actual process output P_{OUT} according to the processing procedure illustrated in Fig. 7.

In practice, when the prediction error calculation processing illustrated in Fig. 7 is started, the prediction error calculation processing unit 21 first sets a duration width of a duration for calculating such a prediction error (a duration from a present time to a past time point; hereinafter, this is referred to as a simulation duration) (S1). A preset value can be applied to this duration width according to the properties of the plant, the type of material, and the like.

Then the prediction error calculation processing unit 21 reads the operation data 24 (time series data of the process input P_{IN} and the process output P_{OUT}) in the simulation duration set in step S1 from the operation data management table 17 (S2).

Further, the prediction error calculation processing unit 21 executes a time series simulation for the process input P_{IN} and the process output P_{OUT} of the MIMO process 2 in the simulation duration (S3) by using the read operation data 24 and the process model 6 extracted from the control device 3 by the process model extraction processing unit 20. By this time series simulation, the prediction error calculation processing unit 21 can also obtain output time series data that reproduces the process output P_{OUT} of the operation data 24 in the simulation duration as a simulation result.

Then, the prediction error calculation processing unit 21 respectively obtains differences between the output time series data acquired in step S3 and the time series data of the actual process output P_{OUT} in the simulation duration read from the operation data management table 17 in step S2, to calculate time series prediction errors of the process output P_{OUT} by the process model 6, respectively. Further, the prediction error calculation processing unit 21 writes the calculated time series prediction error of the individual process output P_{OUT} by the process model 6 into a predetermined storage area in the main storage device 11 (Fig. 2) (S4).

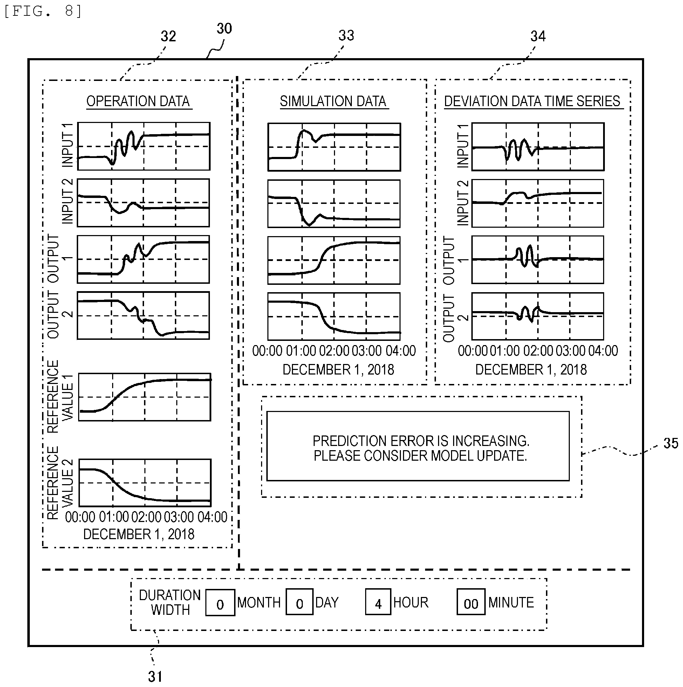

Further, in step S5, the prediction error calculation processing unit 21 transmits the time series prediction error data of the process output P_{OUT} by the process model 6 calculated in step S4, the output time series data obtained by the simulation in step S3, and the operation data 24 (each time series data of the process input P_{IN} and the process output P_{OUT}) in the simulation duration read from the operation data management table 17 in step S2 to the second input and output device 8 as screen display data (S5). As a result, based on this screen display data, a prediction error monitoring screen 30 to be described below with respect to Fig. 8 is displayed on the second input and output device 8, or the prediction error monitoring screen 30 displayed on the second input and output device 8 is updated to the latest state.

Subsequently, the prediction error calculation processing unit 21 calculates the least squares of the time series prediction errors of the individual process output P_{OUT} calculated in step S4, respectively, and determines whether or not at least one of these calculated least squares is equal to or greater than a threshold value preset by the user for each of these least squares (hereinafter, these are referred to as prediction error threshold values) (S6). The prediction error threshold value is the maximum value of an allowable range of the prediction error of the process model 6 with respect to the process output P_{OUT}, and is set for each time series prediction error of the individual process output P_{OUT}.

Then, when obtaining an affirmative result in this determination, the prediction error calculation processing unit 21 returns to step S2, and then repeats the processing after step S2 while sequentially switching the operation data 24 read in step S2 to the operation data 24 for the simulation duration set in step S1 including the latest operation data 24.

On the other hand, when obtaining an affirmative result in the determination of step S6, the prediction error calculation processing unit 21 transmits a notification that an alert should be displayed to the second input and output device 8 (S7), and then returns to step S2 and repeats the processing after step S2 while switching the operation data 24 to the latest one.

Fig. 8 illustrates a configuration example of the prediction error monitoring screen 30 displayed on the second input and output device 8 based on the prediction error monitoring screen display data described above transmitted from the prediction error calculation processing unit 21 in step S5 of the prediction error calculation processing (Fig. 7). As illustrated in Fig. 8, the prediction error monitoring screen 30 includes a duration width display area 31, an operation data display area 32, a simulation data display area 33, a deviation data time series display area 34, and a model update alert display area 35.

The current date and time is displayed in the duration width display area 31. Further, waveforms are displayed in the operation data display area 32, which are representing temporal changes of the individual process input P_{IN}, the individual process output P_{OUT}, and the reference value 9 of these process output P_{OUT} drawn based on the operation data 24 in the simulation duration at that time read from the operation data management table by the prediction error calculation processing unit 21 in step S2 of Fig. 7.

Note that Fig. 8 illustrates an example of displaying two process inputs P_{IN} and two process outputs P_{OUT} to the MIMO process 2, in which the waveforms indicated as "input 1" and "input 2" on the left side of the vertical axis represent the temporal change waveforms of the corresponding process inputs P_{IN}, respectively, and the waveforms indicated as "output 1" and "output 2" on the left side of the vertical axis represent the temporal change waveforms of the corresponding process outputs P_{OUT}, respectively. Further, the waveforms indicated as "REFERENCE VALUE 1" and "REFERENCE VALUE 2" on the left side of the vertical axis are the waveforms representing temporal changes of the corresponding reference values 9, respectively.

Further, in the simulation data display area 33, waveforms of the individual process output P_{OUT} (output time series data) in the simulation duration calculated by the simulation in step S3 of Fig. 7 are displayed, respectively, and in the deviation data time series display area 34, waveforms representing a temporal change of the prediction error (deviation data) of the individual process output P_{OUT} by the process model 6 calculated in step S4 of Fig. 7 are displayed, respectively.

Further, in the model update alert display area 35, a warning message (alert) urging to consider model update is displayed, because the prediction error is large when the alert display instruction notification described above is given to the second input and output device 8 from the prediction error calculation processing unit 21 in step S7 of Fig. 7.

### (1-2-2) Processing of model update data duration selection unit

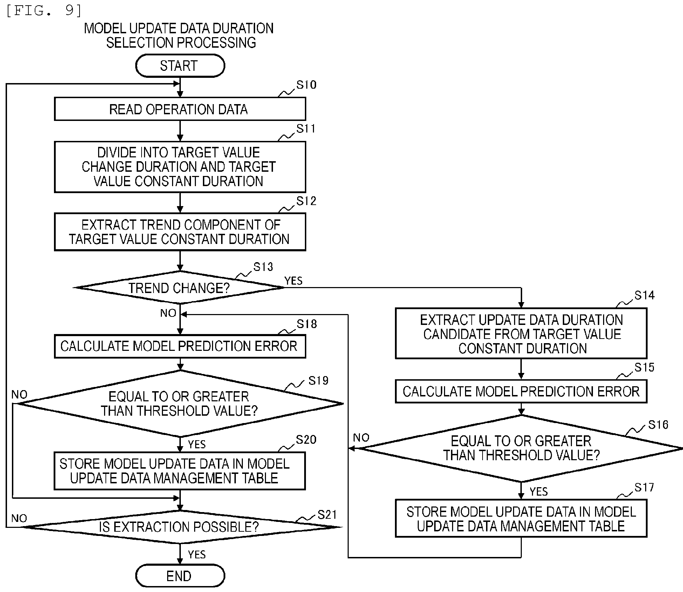

Meanwhile, Fig. 9 illustrates a processing procedure of a series of processing executed by the model update data duration selection unit 22 (Fig. 3) in connection with the update processing of the process model 6 (hereinafter, this is referred to as model update data duration selection processing). The model update data duration selection unit 22 selects the duration of the operation data 24 used for updating the process model 6 according to the processing procedure illustrated in Fig. 9.

In practice, the model update data duration selection unit 22 starts the model update data duration selection processing of Fig. 9 when an execution command of the model update data duration selection processing is given from the second input and output device 8 according to the user operation.

Then, the model update data duration selection unit 22 first reads the operation data for the latest fixed period stored in the operation data management table 17 (S10), and divides the time series data of the reference value 9 of the read operation data 24 into the reference value change durations (durations B, D, F, H, ... in Fig. 4) described above in which the reference value 9 is changing, and the reference value constant durations (durations A, C, E, G, ... in Fig. 4) described above in which the reference value is constant (S11).

Subsequently, the model update data duration selection unit 22 reads the time series data of the process output P_{OUT} of each reference value constant duration from the operation data management table 17, respectively, and extracts trend components representing the trend (trend change) of the steady state properties of the MIMO process 2 in each reference value constant duration based on the read time series data of these process output P_{OUT}, respectively (S12).

Further, the model update data duration selection unit 22 determines whether or not there are trend changes in the steady state properties of the MIMO process 2 (whether or not the trend of the steady state properties of the MIMO process 2 decreases or increases) in any of the reference value constant durations based on the trend component of the steady state properties of the MIMO process 2 in each extracted reference value constant duration (S13). Then, when obtaining a negative result in this determination, the model update data duration selection unit 22 proceeds to step S18.

Meanwhile, obtaining an affirmative result in the determination of step S13 means that the trend of the steady state properties of the MIMO process 2 changes in any of the reference value constant durations. Then, according to the degree of the trend change in the reference value constant duration in which the trend of the steady state properties of the MIMO process 2 is changing, there is a possibility that the operation data 24 in the reference value constant duration can be used as model update data. Thus, at this time, the model update data duration selection unit 22 extracts, from each reference value constant duration, a reference value constant duration in which the influence of noises on the operation data 24 is relatively small such as, for example, a reference value constant duration in which the steady state properties of the MIMO process 2 is changed by at least a certain magnitude (for example, by a constant multiple of the steady state deviation of the MIMO process 2) compared to the noises, as a duration candidate in which the operation data 24 is used for updating the process model 6 (S14).

Next, the model update data duration selection unit 22 calculates, for each reference value constant duration extracted in step S14, the prediction error of the process model 6 in the reference value constant duration as a model prediction error, respectively (S15). Specifically, the model update data duration selection unit 22 reads the time series prediction errors in the reference value constant duration thereof from the time series prediction error for the process output P_{OUT} by the process model 6 written in the predetermined area of the main storage device 11 by the prediction error calculation processing unit 21 in step S4 of Fig. 7 for each reference value constant duration extracted in step S14, respectively, and calculates the least squares of the read time series prediction errors as the model prediction error in the reference value constant duration thereof.

Then, the model update data duration selection unit 22 determines whether or not there is a reference value constant duration in which the value of the model prediction error calculated in step S15 is equal to or greater than a threshold value (hereafter, this is referred to as a model prediction error threshold value) set in advance for the model prediction error in the reference value constant duration extracted in step S14 (S16).

Obtaining a negative result in this determination means that there is no reference value constant duration in which the influence of noises on the operation data 24 is relatively small. Thus, at this time, the model update data duration selection unit 22 proceeds to step S18.

On the other hand, obtaining a positive result in the determination of step S16 means that there is a reference value constant duration in which the influence of noise on the operation data 24 is relatively small. Thus, at this time, the model update data duration selection unit 22 reads the operation data 24 in all the reference value constant durations, among the reference value constant durations extracted in step S14, that obtain a positive result in step S16 from the operation data management table 17, and stores the read operation data 24 in the model update data management table 18 as model update data.

Subsequently, the model update data duration selection unit 22 respectively calculates the prediction error of the process model 6 in these reference value change durations as the model prediction error, based on the operation data 24 in each reference value change duration stored in the operation data management table 17 in the same manner as in step S15 (S18).

Subsequently, the model update data duration selection unit 22 determines whether or not there is a reference value change duration, among the reference value change durations, in which the value of the model prediction error calculated in step S19 is equal to or greater than the model prediction error threshold value described above that is set in advance for the model prediction error (S19).

Obtaining a negative result in this determination means that there is no reference value change duration in which the influence of noises on the operation data 24 is relatively small. Thus, at this time, the model update data duration selection unit 22 proceeds to step S21.

On the other hand, obtaining a positive result in the determination of step S19 means that there is a reference value change duration in which the influence of noise on the operation data 24 is relatively small. Thus, at this time, the model update data duration selection unit 22 reads the operation data 24 in all the reference value change durations, among the reference value change durations, that obtain a positive result in step S19 from the operation data management table 17, and stores the read operation data 24 in the model update data management table 18 as model update data (S20).

After that, the model update data duration selection unit 22 determines whether or not a certain amount of model update data can be extracted and stored in the model update data management table 18 by the processing from steps S10 to S20 described above (S21).

Then, when obtaining a negative result in this determination, the model update data duration selection unit 22 returns to step S10, and then, in step S10, repeats the processing of steps S10 to S21 while reading the operation data for the latest fixed period including the operation data 24 newly stored in the operation data management table 17 until a positive result is obtained in step S21.

Then, when finally obtaining an affirmative result in step S22 by finishing storing at least a certain amount of model update data in the model update data management table 18, the model update data duration selection unit 22 reads the model update unit 23, and then ends the model update data duration selection processing.

### (1-2-3) Processing of model update unit

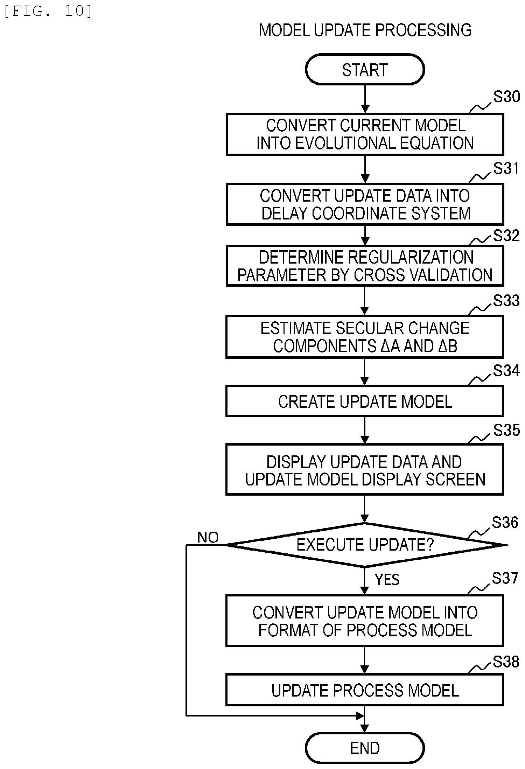

Fig. 10 illustrates a processing procedure of a series of processing (hereinafter, this is referred to as model update processing) executed by a model updating unit 23 (Fig. 3) in connection with the updating processing of the process model 6. The model update unit 23 updates the process model 6 held by the control device 3 (Fig. 1) according to the processing procedure illustrated in Fig. 10. Note that, in the following description, it is assumed that the process model 6 is a linear model such as a state space equation model, a transfer function model, or the like.

When called by the model update data duration selection unit 22, the model update unit 23 starts the model update processing illustrated in Fig. 10, and first converts an expression format of the current process model 6 into an evolutional equation format using a delay coordinate system as in the following Equation (S30). $x \left(t+1\right) = {A}_{0} x \left(t\right) + {B}_{0} u \left(t\right)$ where, $x \left(t\right) = ⌊ \begin{matrix}y \left(t\right) \\ u \left(t-1\right) \\ y \left(t-1\right) \\ ⋮ \\ u \left(t-d\right) \\ y \left(t-d\right)\end{matrix} ⌋ \left(t:time,d:delay\right)$

In addition, in Equation (1), y(t) is a value at time t of the process output P_{OUT} forming the operation data 24, and u(t) is a value at time t of the process input P_{IN} forming the operation data 24. Further, A₀ and B₀ are coefficient matrices derived from the current process model 6. Note that A₀ is a (dM + dP + P) row (dM + dP + P) column, and B₀ is a (dM + dP + P) row M column.

The evolutional equation form using the delay coordinate system of Equation (1) has a more redundant structure than the original process model 6 (for example, the dimension of the coefficient matrix is large). Therefore, even when the MIMO process 2 is subjected to secular change which corresponds to the change in the structure (the dimension of the state vector in the state space equation model, the order in the transfer function model, and the like) of the process model 6, it is also possible to absorb the change in the structure described above on Equation (1), which is an evolutional equation, and update the model by a simple least squares method as described below.

Hereinafter, a method of converting the process model 6 into an evolutional equation will be described. In Equation (1), the first to Pth rows of A₀ and B₀ have the same structure as the so-called ARX model. According to Minh Q. Phan, Ryoung K. Lim, and Richard W. Longman, in "Unifying input-output and state-space perspectives of predictive control," Department of mechanical and aerospace engineering technical report No.3044, Prenceton University, 1998. (hereinafter, this is referred to as Non-PTL 1), when the process model 6 is a state equation of discrete time, the process model 6 can be analytically converted into an ARX model. When the process model 6 is not represented by a discrete time state space equation, such as when the process model 6 is represented by a continuous time state space equation including dead time, for example, a numerical simulation of the output y(t) when the input u(t) is used as test signals such as an M sequence or the like is performed based on the process model 6, and from the obtained simulation data, an ARX model is identified by a sparse optimization technique such as least absolute shrinkage and selection operator (LASSO) regression or the like while avoiding over fitting, and these are designated as the first to Pth rows of A₀ and B₀. Note that the elements from the (P + 1)th row to the (dM + dP + P)th row of A₀ and B₀ are fixed values of 0 or 1 regardless of the original process model 6, and thus do not need to be calculated.

Subsequently, the model update unit 23 converts an expression format of each model update data stored in the model update data management table 18 into an expression format of the delay coordinate system (S31).

Next, the model update unit 23 estimates ΔA, which is a secular change of the coefficient matrix A₀ in the MINO model 2 (Fig. 1), and ΔB, which is a secular change of the coefficient matrix B₀ in the MINO model 2, by the following Equation (2).
[Equation 2]$\left[ΔA, ΔB\right] = \begin{matrix}argmin \\ ΔA , ΔB\end{matrix} {\sum }_{t = {t}_{0}}^{{t}_{0} + T} {‖ \left(x\left(t+1\right)-{A}_{0}x\left(t\right)-{B}_{0}u\left(t\right)\right) - \left(\begin{matrix}ΔAx \left(t\right) + \\ ΔBu \left(t\right)\end{matrix}\right) ‖}^{2} + λ {‖ \left[ΔA ΔB\right] ‖}_{1,2}$

Note that, in Equation (2), the part expressed by
[Equation 3] $\left(x\left(t+1\right)-{A}_{0}x\left(t\right)-{B}_{0}u\left(t\right)\right)$ represents a prediction error at each time t, the part expressed by
[Equation 4] $\left(ΔAx\left(t\right)+ΔBu\left(t\right)\right)$ is a correction term for a secular change component, and the part expressed by
[Equation 5] $λ {‖ \left[ΔA ΔB\right] ‖}_{1,2}$ is a term for ensuring sparsity and preventing over fitting. In Equation (5),
[Equation 6] ${‖ \left[ΔA ΔB\right] ‖}_{1,2}$ is L1 or the Frobenius norm of the matrix [ΔA ΔB].

Hereinafter, the purpose and effect of the estimation method of ΔA and ΔB will be described, and then the corresponding processing of steps S32 and S33 will be described.

The regularization term of Equation (5) is necessary to suppress the influence of the observed noise included in the process inputs P_{IN} and P_{OUT} and to reflect the secular change of the MIMO process 6 in the process model 2 as much as possible. In general, a process input P_{IN} contains only a limited time scale change component as compared to the test signals such as an M sequence and the like. Therefore, when ΔA and AB are estimated without the regularization term described above, in the time scale not covered by the fluctuation component described above, the influence of the observed noises included in the P_{IN} and P_{OUT} is reflected in ΔA and ΔB instead of the secular change of the MIMO process 6. Further, since the observed noises included in P_{OUT} are fed back to the prediction processing unit 5 and used for determining the P_{IN}, when ΔA and ΔB are estimated without the regularization term described above, the properties of the predictive control processing unit 5 are reflected in ΔA and ΔB. From the above, it is difficult to obtain ΔA and ΔB accurately representing the secular change of MIMO process 6 even by using the general least squares method (not including the regularization term). On the other hand, in the least squares method including the regularization term of Equation (2), by providing a penalty according to the size of the elements of ΔA and ΔB, it is possible to prevent ΔA and ΔB from over fitting with the properties of the noise and the prediction processing unit 5, and to obtain ΔA and ΔB that accurately represent the secular change of the MIMO process 6.

Prior to the estimation of ΔA and ΔB described above, the model update unit 23 first determines the regularization parameter λby cross validation. Specifically, among the delay coordinate system format data converted in step S31, by using one or both of a dataset when two or more different reference values are changed at different times, a pair of a dataset when the reference values are changed, and a dataset when the reference values are constant, a cross validation error of Equation (2) is calculated, and λthat minimizes the cross validation error is adopted (S32).

After that, the model update unit 23 estimates ΔA and ΔB according to Equation (2) using the regularization parameter λadopted above (S33).

As described above, it is possible to reflect the secular change of the MIMO process 6 included in the operation data 24 to ΔA and ΔB as much as possible without over fitting to a specific valve or time scale in the process input P_{IN}.

Then, the model update unit 23 generates an updated model of the process model 6 (hereinafter, this is referred to as an update model) according to the following equation by using ΔA and ΔB estimated in step S33 (S34).
[Equation 7] $x \left(t+1\right) = \left({A}_{0}+ΔA\right) x \left(t\right) + \left({B}_{0}+ΔB\right) u \left(t\right)$

Hereinafter, the contents of the related literature regarding the delay coordinate system and regularization, and the difference between the related literature and the model update unit 23 will be described below.

The idea of the delay coordinate system used in the model update unit 23 itself is widely used in the analysis and control of the chaos generated in the nonlinear dynamical system. According to Toshiaki Kawagoshi and Takashi Hikihara, "An Experimental Study on Stabilization of Periodic Motion in Magneto-Elastic Chaos," Technical Report of IEICE, NLP94-80 (1994) (hereinafter, referred to as Non-PTL 2)); Higashino, Kawagoshi, Hikihara, "Stabilization of unstable periodic orbits in magnetic elastic chaos using time-delayed feedback," Shingaku Giho, NLP95-11 (1995) (hereinafter, referred to as Non-PTL 3); and Takashi Hikihara and Toshiaki Kawagoshi, "An experimental study on stabilization of unstable periodic motion in magneto-elastic chaos," Physics Letters A, Vol.211, pp.29-36 (1996) (hereinafter, referred to as Non-PTL 4), in the magnetoelastic system, the chaotic oscillation of the pendulum is stabilized by feeding back the measured value of the displacement of the pendulum with a time delay (delayed feedback).

Further, Takashi Hikihara and Yoshisuke Ueda, "An expansion of system with time delayed feedback control to spatio-temporal state space," Chaos, Vol.9, No.4, pp.887-892 (1999) (hereinafter, this is referred to as Non-PTL 5) explains that a nonlinear dynamical system including a delay can be mapped to an infinite-dimensional topological space including a continuous state and its discrete time evolution in a time duration having a time width equal to the delay (hereinafter, referred to as a finite delay duration), and the solution behavior of a nonlinear dynamical system with a delay can be replaced by the problem of the convergence of the time evolution (wave propagation) of a function in a finite delay duration. That is, stabilization by controlling the nonlinear dynamical system with delayed feedback is equivalent to ensuring the stability of the wave propagation solution indicated by the function in the finite delay duration. This equivalence corresponds to the preservation of dynamical properties such as stability and the like before and after the transformation of the process model 6, and suggests the theoretical validity of the transformation. (The contents of the known documents described in this paragraph are based on the guidance provided by Professor Takashi Hikihara of the Graduate School of Engineering, Kyoto University.)

Furthermore, in recent years, the application of delay coordinate systems is progressing in the analysis and control of nonlinear dynamical systems based on data. For example, Yoshihiko Susuki, Kyoichi Sako, and Takashi Hikihara, "On the Spectral Equivalence of Koopman Operators through Delay Embedding," arXiv preprint, arXiv:1706.01006, 2017 (hereinafter, this is referred to as Non-PTL 6) explains that the spectrum of the nonlinear autonomous dynamical system is conserved before and after the conversion by the delay coordinate system. This suggests the theoretical validity of the conversion of the process model 6 (however, note that the process model 6 is a linear non-self-excited system and is different from the nonlinear self-excited system targeted in Non-PTL 6, so this does not suggest the general validity). As an application of the above idea, Yoshihiko Susuki and Kyoichi Sako, "Data-Based Voltage Analysis of Power Systems via Delay Embedding and Extended Dynamic Mode Decomposition," IFAC-PapersOnLine, Vol. 51, No. 28, pp.221-226, 2018 (hereinafter, this is referred to as Non-PTL 7) explains that the spectrum of the state space equation model described above can be calculated by using the delay coordinate system even when only the voltage at a single point can be observed in the nonlinear state space equation model of the power system.

Meanwhile, the model update unit 23 aims to absorb changes in the structure of the process model 6 by using the delay coordinate system as described above. That is, with respect to the problem of updating the process model so as to reflect the secular change of the process, the difference between the researches described in Non-PTLs 1 to 7 described above and the model update unit 23 is that a unique delay coordinate system application technique is devised.

The idea of identifying a model in a delay coordinate system itself is also widely known, and Milan Korda and Igor Mezic, in "Linear predictors for nonlinear dynamical systems: Koopman operator meets model predictive control," Automatica, Vol.93, pp.149-160, 2018 (hereinafter, referred to as Non-PTL 8), and by Lennart Ljung, in "System Identification," in A. Prochazka, J. Uhlir, P. W. J. Rayner, N. G. Kingsbury (eds), Signal Analysis and Prediction: Applied and Numerical Harmonic Analysis, Birkhauser, Boston, MA, pp.163-173, 1998" (hereinafter, referred to as Non-PTL 9) propose an identification method similar to Equation (2). In the context of this embodiment, the idea described above corresponds to identifying A₀ + ΔA and B₀ + ΔB using the operation data 24 when the process input P_{IN} is test signals such as an M sequence and the like. However, as described above, since the process input P_{IN} includes only a limited time scale change component as compared to the test signals such as an M sequence and the like, it is difficult to directly identify A₀ + ΔA and B₀ + ΔB by the methods described in Non-PTLs 8 and 9, and the processing of steps S32 and S33 is required.

The regularization used in steps S32 and S33 is a technique often used in system identification problems with small amounts of data. For example, Alexandre Mauroy and Jorge Goncalves, in "Koopman-based lifting techniques for nonlinear systems identification," IEEE Transaction on Automatic Control, 2019 (Published Online) (hereinafter, referred to as Non-PTL 10) explains that L1 regularization is effective in identifying a nonlinear dynamical system when the number of data samples is small. However, there is no particular description regarding the method for determining the regularization parameter corresponding to λ in Equation (5).

Meanwhile, the model update unit 23 automatically calculates the regularization parameter by cross validation from the delay coordinate system format data converted in step S31 as described above for Equation (2). That is, the difference between the Non-PTL 10 and the model update unit 23 is that a regularization parameter determination method unique to the problem of model update of the MIMO process under the control of MPC is devised.

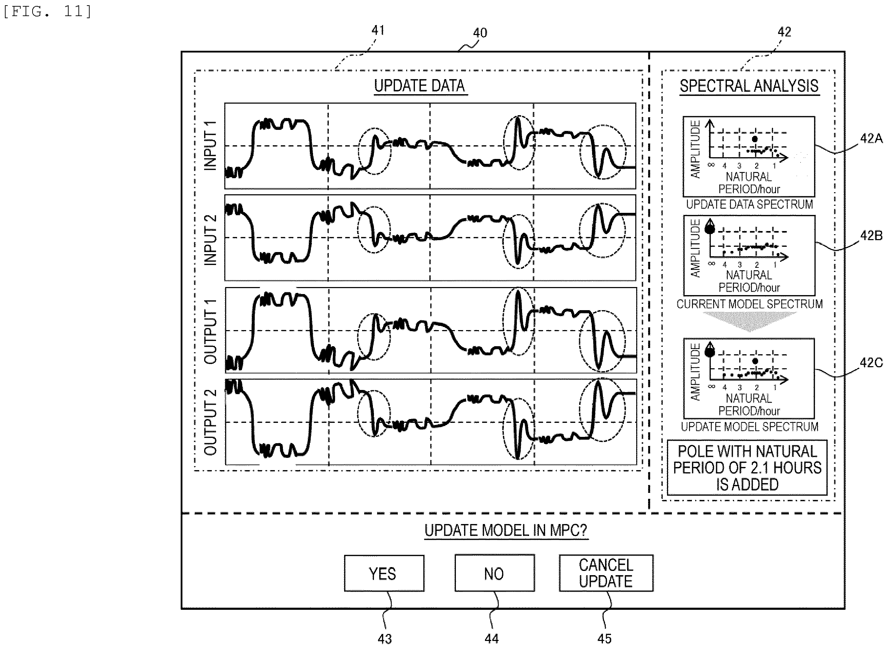

Subsequently, the model update unit 23 transmits the operation data 24 (time series data of process input P_{IN} and process output P_{OUT}) used for generating the update model and the data of the update model to the second input and output device 8 (Fig. 1), to display a model update data and update model display screen 40, which will be described below with respect to Fig. 11, on the second input and output device 8 (S35).

Further, the model update unit 23 determines whether or not the user performs an operation of approving the update of the process model 6 on the model update data and update model display screen 30 (S36). When confirming that the user performs an operation of refusing to update the process model 6 on the model update data and update model display screen 40, the model update unit 23 ends this model update processing.

On the contrary, when confirming that the user performs the operation of approving the update of the process model 6 on the model update data and update model display screen 40, the model update unit 23 converts the update model generated in step S34 into a format suitable for the process model 6 in the control device 3 (S37), and replaces the process model 6 held by the control device 3 at that time with the converted update model to update the process model 6 of the control device 3 (S38). Then, after that, the model update unit 23 ends this model update processing.

Fig. 11 illustrates a specific configuration example of the model update data and update model display screen 40 described above. As illustrated in Fig. 11, the model update data and update model display screen 40 includes a model update data display area 41, a spectral display area 42, a YES button 43, a NO button 44, and an update cancel button 45.

Then, in the model update data display area 41, each waveform representing a temporal change of the process input P_{IN} and the process output P_{OUT} is respectively displayed based on the time series data of the individual process input P_{IN} and individual process output P_{OUT} used to generate the update model described above that is transmitted from the model update unit 23.

Note that Fig. 11 is a display example of displaying two process input P_{IN} and two process output P_{OUT} used for generating the update model, in which the waveforms indicated as "input 1" and "input 2" on the left side of the vertical axis represent the temporal change waveforms of the corresponding process inputs P_{IN}, respectively, and the waveforms indicated as "output 1" and "output 2" on the left side of the vertical axis represent the temporal change waveforms of the corresponding process outputs P_{OUT}, respectively.

Further, as the respective feature amounts of the model update data, the current process model 6 and the update model, two-dimensional coordinates 42A representing the analysis results of the spectral analysis for the model update data, two-dimensional coordinates 42B representing the analysis results of the spectral analysis for the current process model 6, and two-dimensional coordinates 42C representing the analysis results of the spectral analysis for the update model are displayed in the spectral display area 42.

Then, in the model update data and update model display screen 40, by clicking the YES button 43, the user can approve the process model 6 held by the control device 3 (Fig. 1) to be updated with the update model of which spectral analysis result is displayed in the spectral display area 42 at that time. In this case, a notification approving the update is given from the second input and output device 8 to the model update unit 23 of the model update device 4, and based on this notification, the model update unit 23, which obtains an affirmative result in step S35 of Fig. 10, replaces the process model 6 with the update model to update the process model 6.

The user can also click the NO button 44 to refuse to update the process model 6 to the update model. In this case, a notification refusing the update is given from the second input and output device 8 to the model update unit 23 of the model update device 4, and based on this notification, the model update unit 23, which obtains a negative result in step S35 of Fig. 10, ends the model update processing without updating the process model 6.

Further, the user can also click the update cancel button 45 to cancel the update of the process model 6 immediately after the update. In this case, a notification canceling the update is given from the second input and output device 8 to the model update unit 23 of the model update device 4, and based on this notification, the model update unit 23 executes a process of returning the process model 6 immediately after the update to the process model 6 before the update.

### (1-3) Effects of the present embodiment

As described above, in the process control system 1 of the present embodiment, since the process model 6 can be updated without using the test signal, the process model 6 can be updated in a state that reflects the temporal change of the MIMO process 2 without causing a loss of operating profit or violating the operating regulations of the plant due to the use of the test signal.

In addition, in this process control system 1, since the user can update the model by himself or herself, the number of times of the support by the MPC vendor can be reduced, and the labor, time, and financial cost required for system maintenance can be significantly reduced accordingly.

Further, the method of updating the process model 6 of the present embodiment does not require a special device integrally formed with a test signal generator (tester) and MPC, and further, as described above for step S36 in Fig. 10, the model update unit 23 of the model update device 4 changes the format of the final update model to the format of the process model 6, and thus, regardless of the format of the process model 6, the method can be easily applied to the existing plant in which MPC is introduced (a plant configured with the first input and output device 7, the control device 3, and the MIMO process 2 in Fig. 1).

Therefore, according to the present embodiment, it is possible to implement the process control system 1 which significantly reduces the labor, time, and monetary cost required for updating the model, and is also easily applicable to a plant in which an existing model predictive control is introduced, without causing a loss of operating profit.

Further, as described above with respect to Fig. 11, in this process control system 1, since a feature amount of the update model and the operation data 24 used for generating the update model are displayed, user can easily determine whether or not the process model 6 needs to be updated by using the information.

### (2) Second embodiment

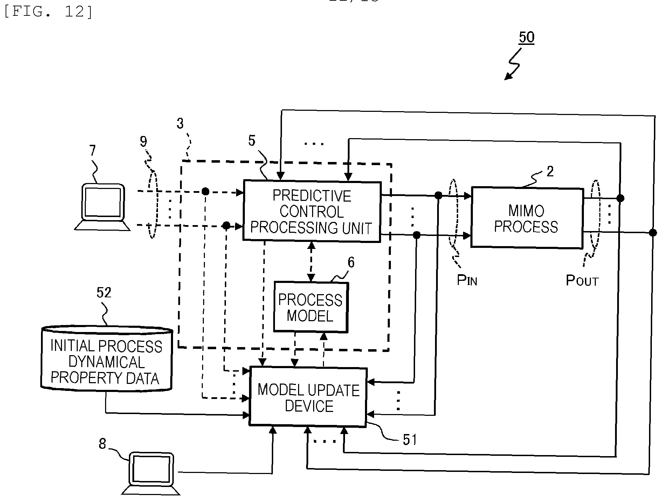

Fig. 12, which has the same reference numerals as those corresponding to Fig. 1, illustrates a system configuration of a process control system 50 according to a second embodiment. In the process control system 50, initial process dynamical property data 52 is input to a model update device 51. The initial process dynamical property data 52 is data used for identification of the process model 6. For example, the initial process dynamical property data 52 can use one or both of the information on dynamical properties (dynamic identification at an initial stage of the MIMO process 2) such as the frequency response characteristics of the MIMO process 2 and the like at the time of introduction of the control device 3, and the test data (test data at the initial stage of the MIMO process 2) at the time of introduction of the control device 3.

The model update device 51 reflects the temporal change of the MIMO process 2 in the process model 6 by using the initial process dynamical property data 52 instead of extracting the process model 6. As a result, even when the maintenance service of the vendor of the control device 3 is required for the extraction of the process model 6 and the extraction of the predictive control algorithm, it is possible to decrease the number of maintenance services required for model update and reduce the cost of model update.

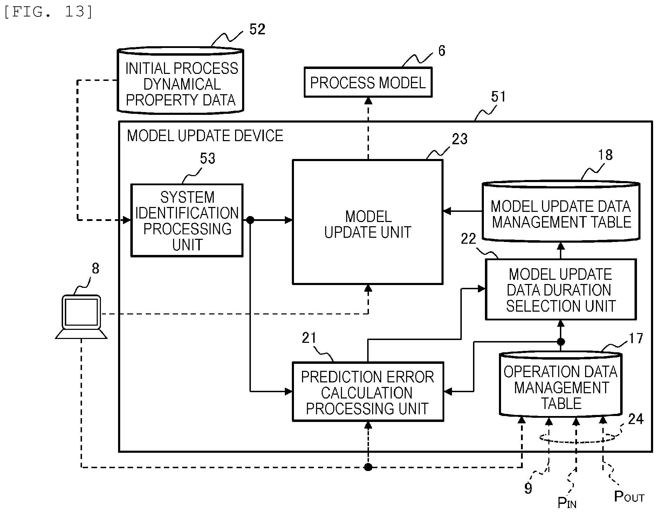

Fig. 13 illustrates a logical configuration of the model update device 51 of the present embodiment. A hardware configuration of the model update device 51 is the same as that of the model update device 4 of the first embodiment described above with respect to Fig. 3, except that a system identification processing unit 53 is provided instead of the process model extraction processing unit 20 (Fig. 3) of the first embodiment.

The system identification processing unit 53 is a functional unit implemented by the CPU 10 (Fig. 2) executing a system identification processing program (not illustrated) stored in the main storage device 11 (Fig. 2), and generates the initial process model 6 from the initial process dynamical property data 52. The system identification processing unit 53 can generate the initial process model 6 by an identification method such as a subspace identification method and the like.

As described above, in the present embodiment, the model update device 51 generates the initial process model 6 by using the initial process dynamical property data 52 instead of extracting the process model 6 from a control device 4, and generates an update model reflecting the temporal change of the MIMO process 2 by using the generated process model 6. Therefore, as in the first embodiment, according to the model update device 51 of the present embodiment, the process model 6 held by the control device 4 can be updated to a state reflecting the temporal change of the MIMO model 2, such that it is possible to obtain the same effect as that of the first embodiment.

### (3) Other embodiments

In the first and second embodiments described above, a case where the process model 6 and the update model have different formats is described, but the present invention is not limited to this, and the control device 3 may be constructed such that the update model in the form of an evolutional equation can be used as it is as the process model 6. By doing so, the load on the model update unit 23 can be reduced.

Further, in the first and second embodiments described above, a case where the process model extraction processing unit 20, the prediction error calculation processing unit 21, the model update data duration selection unit 22, the model update unit 23, and the system identification processing unit 53 are configured by software is described, but the present invention is not limited to this, and some or all of the above may be configured by dedicated hardware.

Further, in the first and second embodiments described above, although a case is described in which the conversion unit that converts the data format of the operation data 24 of the MIMO process 2, which is the target process, into the delay coordinate format, the update model generation unit that generates an update model reflecting the secular change information of the MIMO process 2 by solving a regression problem including a regularization term for the operation data 24 converted to the delay coordinate format, and the model update unit that updates the process model 6 of the control device 3 by replacing the model with the update model generated by the update model generation unit are constructed by one model update unit 23, the present invention is not limited to this, and the update unit, the update model generation unit, and the model update unit may be provided separately.

### (Acknowledgment)

The present inventors received valuable advice from Professor Takashi Hikihara of the Graduate School of Engineering, Kyoto University, and Associate Professor Yoshihiko Susuki, Professor of the Graduate School of Engineering, Osaka Prefectural University about the contents of the prior literature on the delay coordinate system and regularization from [0092] to [0096]. The present inventors would like to express our gratitude here.

### INDUSTRIAL APPLICABILITY

The present invention can be widely applied to various model update devices that update a model of a target process in a model predictive control.

### Reference Signs List

- 1, 50:: process control system
- 2:: MIMO process
- 3:: control device
- 4, 51:: model update device
- 5:: predictive control processing unit
- 6:: process model
- 7, 8:: input and output device
- 9:: reference value
- 10:: CPU
- 17:: operation data management table
- 18:: model update data management table
- 20:: process model extraction processing unit
- 21:: prediction error calculation processing unit
- 22:: model update data duration selection unit
- 23:: model update unit
- 30:: prediction error monitoring screen
- 40:: model update data and update model display screen
- 52:: initial process dynamical property data
- 53:: system identification processing unit
- P_{IN}:: process input
- P_{OUT}:: process output

## Claims

1. A model update device that updates a model of a target process in a model predictive control, comprising:
a conversion unit that converts a data format of operation data of the target process into a delay coordinate format;
an update model generation unit that generates an update model reflecting secular change information of the target process by solving a regression problem including a regularization term for the operation data converted into the delay coordinate format; and
a model update unit that updates the model by replacing the model with the update model generated by the update model generation unit.

2. The model update device according to claim 1, further comprising a model update data duration selection unit that selects a duration in which an influence of noise on the operation data is relatively small and extracts the operation data of the target process in the selected duration,
wherein the conversion unit converts the data format of the operation data extracted by the model update data duration selection unit into a delay coordinate format.

3. The model update device according to claim 2, wherein the model update data duration selection unit selects, as a duration in which the influence of noise on the operation data is relatively small, a duration in which a reference value of an output of the target process is changed by at least a certain magnitude compared to the noise.

4. The model update device according to claim 3, wherein the model update data duration selection unit further selects a duration in which the reference value of the output of the target process is not changed, but trend of steady state properties of the target process is changed by at least a certain magnitude compared to a steady state deviation of the target process.

5. The model update device according to claim 4, wherein the update model generation unit performs cross validation by using one or both of a dataset when two or more different values of the reference values are changed at different times, and a pair of a dataset when the reference values are changed and a dataset when the reference values are constant, to determine regularization parameters in the regularization term.

6. The model update device according to claim 1, further comprising a prediction error calculation processing unit that executes a simulation of the target process by using the model and the operation data, calculates a prediction error of the model based on the simulation result and the operation data, and presents an alert to a user when the calculated prediction error is equal to or greater than a threshold value.

7. The model update device according to claim 1, wherein the update model generation unit displays the operation data used to generate the update model and a feature amount of the update model.

8. The model update device according to claim 1, further comprising a system identification processing unit that generates the model at an initial stage of the target process, based on initial process dynamical property data including at least one of information regarding a dynamic identification at the initial stage of the target process and initial test data of the target process,
wherein the update model generation unit generates an update model reflecting the secular change information of the target process based on the model generated by the system identification processing unit.

9. A model update method executed by a model update device that updates a model of a target process in a model predictive control, the method comprising:
a first step of converting a data format of operation data of the target process into a delay coordinate format;
a second step of generating an update model reflecting secular change information of the target process by solving a regression problem including a regularization term for the operation data converted into the delay coordinate format; and
a third step of updating the model by replacing the model with the generated update model.

10. The model update method according to claim 9, further comprising a model update data duration selection step of selecting a duration in which an influence of noise on the operation data is relatively small, and extracting the operation data of the target process in the selected duration,
wherein the first step includes converting the data format of the operation data extracted in the model update data duration selection step to a delay coordinate format.

11. The model update method according to claim 10, wherein the model update data duration selection step includes selecting, as a duration in which the influence of noise on the operation data is relatively small, a duration in which a reference value of an output of the target process is changed by at least a certain magnitude compared to the noise.

12. The model update method according to claim 11, wherein the model update data duration selection step includes further selecting a duration in which the reference value of the output of the target process is not changed, but trend of steady state properties of the target process is changed by at least a certain magnitude compared to a steady state deviation of the target process.

13. The model update method according to claim 12, wherein the second step includes performing cross validation by using one or both of a dataset when two or more different values of the reference values are changed at different times, and a pair of a dataset when the reference values are changed and a dataset when the reference values are constant, to determine regularization parameters in the regularization term.

14. The model update method according to claim 9, further comprising a prediction error calculation processing step of executing a simulation of the target process by using the model and the operation data, calculating a prediction error of the model based on the simulation result and the operation data, and presenting an alert to a user when the calculated prediction error is equal to or greater than a threshold value.

15. The model update method according to claim 9, wherein the second step includes displaying the operation data used to generate the update model and a feature amount of the update model.

16. The model update method according to claim 9, further comprising a system identification processing step of generating the model at an initial stage of the target process, based on initial process dynamical property data including at least one of information regarding a dynamic identification at the initial stage of the target process and initial test data of the target process,
wherein the second step includes generating an update model reflecting the secular change information of the target process based on the model generated by the system identification processing unit.

17. A process control system that controls a target process, comprising:
a control device that holds a model of the target process, calculates an input value for the target process such that an error of an output value of the target process with respect to a reference value predicted by using the model is minimized, and inputs the calculated input value to the target process to control the target process; and
a model update device that updates the model held by the control unit,
wherein the model update device includes
a conversion unit that converts a data format of operation data of the target process into a delay coordinate format,
an update model generation unit that generates an update model reflecting secular change information of the target process by solving a regression problem including a regularization term for the operation data converted into the delay coordinate format, and
a model update unit that updates the model by replacing the model with the update model generated by the update model generation unit.
